# EUROPEAN PATENT APPLICATION

(11) **EP 3 483 468 A1**
(43) Date of publication of application: **15.05.2019**
(21) Application number: 17823947.1
(22) Date of filing: 13.06.2017
(51) Int. Cl.: F16F 7/00, F16F 7/12, B60R 19/34

(54) **LOAD ENERGY-ABSORBER**

(30) Priority: 05.07.2016 JP 2016133529
(71) Applicant: KABUSHIKI KAISHA TOYOTA JIDOSHOKKI, Kariya-shi, Aichi 448-8671 (JP)
(72) Inventor: SUZUKI, Hiroyuki, Kariya-shi Aichi 448-8671 (JP); KAMIYA, Ryuta, Kariya-shi Aichi 448-8671 (JP); TSUJI, Ryohei, Kariya-shi Aichi 448-8671 (JP)
(74) Representative: TBK
(86) International application number: PCT/JP2017/021841
(87) International publication number: WO 2018/008340

(57) **Abstract**

A fiber-reinforced resin load energy-absorber has: a multi-layer woven fabric or laminated woven fabric as a reinforcement base material; a resin as a matrix; slits; binding threads; and reinforcing members. The reinforcement base material has corners formed by bending said reinforcement base material. Slits are provided at least in the portions of the reinforcement base material that form the corners. The binding threads bind each of the woven fabric layers in the multi-layer woven fabric or laminated woven fabric. The binding threads are configured so as to bind each of the woven fabric layers when the multi-layer woven fabric or laminated woven fabric is divided in the thickness direction into at least two woven fabric layers. The reinforcing members are held inside the slits.

## Description

### TECHNICAL FIELD

The present invention relates to a load energy absorber.

### BACKGROUND ART

Atypical automobile (vehicle) includes a bumper coupled to the front and rear of a vehicle body that absorbs impact energy during a collision to protect the vehicle body and vehicle occupants. The bumper needs to absorb energy in an irreversible manner when a large load is applied such as when the automobile collides with an obstacle. A bumper includes a structure supporting the bumper on a front side member with a crash box, which serves as a load energy absorber.

A crash box serves to protect the vehicle occupants by absorbing load energy during a collision and to reduce damage to functional components. Additionally, when a vehicle cannot be driven due to a breakdown or the like and needs to be towed and moved by another vehicle to a safe site (repair site) or fixed to a movable carriage for transportation, the crash box serves to transmit a bending load to the front side member and ensure safety of the moved vehicle or fixed vehicle.

As shown in Fig. 8, patent document 1 discloses a load energy absorber 80 formed from a fiber-reinforced resin. The load energy absorber 80 includes a substantially corrugated beam 81 and a coupling portion 82 integrated with one end 81a of the beam 81. The cross-section of the beam 81 in a direction in which ridges alternate with furrows is shaped as an open cross-section including two grooves 83 arranged in parallel.

With the beam 81, a direction in which the two grooves 83 are arranged and a direction in which the ridges alternate with the furrows will be referred to as a transverse direction, and a direction in which the grooves 83 extend will be referred to as a longitudinal direction. Each groove 83 includes a flat rectangular bottom wall 83a forming a bottom surface of the groove 83 and rectangular flat side walls 83b forming side surfaces of the groove 83. Further, the beam 81 includes a corner 83c at a portion continuous with the bottom wall 83a and the side wall 83b.

Bolts 85 are inserted through the coupling portion 82 and a bumper reinforcement 86, and nuts 87 are fastened to the bolts 85. This fixes the load energy absorber 80 to the bumper reinforcement 86. When an impact load is applied to the bumper reinforcement 86 in a direction indicated by arrow R, the load energy absorber 80 crushes in the longitudinal direction of the groove 83 to absorb the impact load.

### PRIOR ART LITERATURE

### PATENT LITERATURE

Patent Document 1: Japanese Laid-Open Patent Publication No. 2007-8283

### SUMMARY OF THE INVENTION

### PROBLEM TO BE SOLVED BY THE INVENTION

With the load energy absorber 80, when an impact load is applied, stress concentration has a tendency to occur at each corner 83c of the beam 81. When strength of the corner 83c is not sufficient, crushing does not occur in a preferred manner and impact load energy may not be sufficiently absorbed. To ensure strength of the corner 83c, there is a need to, for example, increase the thickness of the corner 83c or reinforce the corner 83c with a separate component. However, when increasing the thickness of the corner 83c to ensure strength, the proximity of the corner 83c (bottom wall 83a and side walls 83b) will also be increased in thickness. This will increase the mass of the load energy absorber 80. Further, the arrangement of a separate component at the corner 83c to ensure strength requires welding (stitching) to prevent removal of the separate component from the corner 83c. This increases cost and the mass.

One object of the present invention is to provide a load energy absorber that minimizes increases in cost and mass while ensuring the strength of the corner.

### MEANS FOR SOLVING THE PROBLEM

A load energy absorber formed by a fiber-reinforced resin that achieves the above object according to one embodiment of the present invention includes a multi-layer woven textile or a laminated woven textile serving as a reinforcement base material, a resin serving as a matrix, a slit, a joining yarn, and a reinforcement member. The reinforcement base material includes a corner formed by bending the reinforcement base material. The slit is arranged in the reinforcement base material at a portion where at least the corner is formed. The joining yarn joins woven layers of the multi-layer woven textile or the laminated woven textile. The joining yarn is configured to join the woven layers in a state in which the woven layers of the multi-layer woven textile or the laminated woven textile are divided into two or more in a thickness-wise direction. The reinforcement member is accommodated inside the slit.

Accordingly, when an impact load is applied in a load input direction to the load energy absorber including the corner, stress concentration occurs at the corner in the load input direction. The reinforcement member ensures strength of the corner so that the load energy absorber is crushed in the load input direction in a preferred manner thereby absorbing the impact load energy.

With such a load energy absorber, the multi-layer woven textile or the laminated woven textile is divided in the thickness-wise direction to form the slit. The reinforcement member is accommodated in the slit to ensure the strength of the corner. Accordingly, there is no need to increase the number or the thickness of the woven layers in the multi-layer woven textile or the laminated woven textile, which serves as the reinforcement base material, to ensure strength of the corner. Further, the strength of the corner is increased without increasing the thickness of portions other than the corner. Also, the mass of the load energy absorber is not increased more than necessary. Further, the reinforcement member is accommodated in the slit so that there is no need to arrange a separate component at the corner and couple the separate component to prevent removal from the corner. Thus, the mass of the load energy absorber and the manufacturing cost are not increased.

Preferably, with the load energy absorber, the reinforcement member is a reinforcement fiber.

Accordingly, the reinforcement member and the reinforcement base material are both reinforcement fibers. This limits decreases in strength caused by mixing materials that differ from the reinforcement fiber.

Preferably, the reinforcement fiber is one of a plurality of reinforcement fibers. The reinforcement fibers are arranged so that fiber axis directions are a single direction. The fiber axis direction is the load input direction.

Accordingly, the reinforcement fiber improves strength in the load input direction.

### BRIEF DESCRIPTION OF THE DRAWINGS

Fig. 1 is a plan view of a bumper reinforcement and a crash box according to one embodiment of the present invention.
Fig. 2 is a perspective view of the crash box in Fig. 1.
Fig. 3 is a cross-sectional view of the crash box in Fig. 2.
Fig. 4 is schematic diagram showing a portion of a multi-layer woven textile in Fig. 3 in a state in which a slit is formed.
Fig. 5A is a perspective view showing a portion of the multi-layer woven textile including a slit in Fig. 3
Fig. 5B is a perspective view showing a portion of the multi-layer woven textile in a state in which bottom corners have been formed.
Fig. 5C is a perspective view showing a portion of the multi-layer woven textile in Fig. 3 in a state in which the slit is open.
Fig. 5D is a perspective view showing a portion of the multi-layer woven textile in Fig. 3 in a state in which reinforcement fibers are inserted in the slit.
Fig. 6 is a schematic view of a laminated woven textile according to another example.
Fig. 7 is a cross-sectional view showing a portion of the bottom corner according to a further example.
Fig. 8 is a perspective view of the prior art.

### EMBODIMENTS OF THE INVENTION

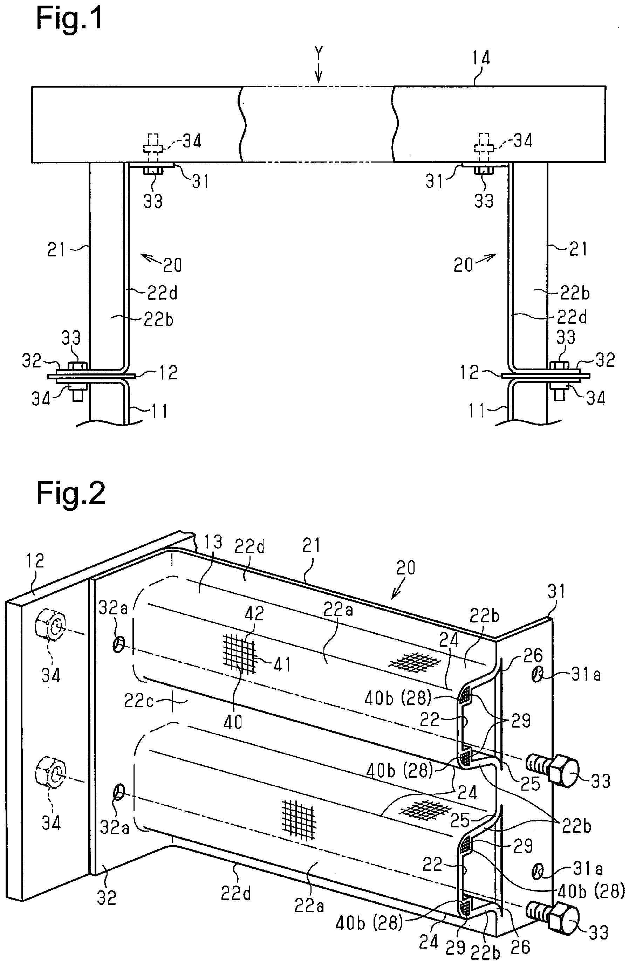

One embodiment of a load energy absorber embodied in a crash box will now be described with reference to Figs. 1 to 5.

As shown in Fig. 1, a left front side member 11 and a right front side member 11 construct a vehicle body. A rear end of a crash box 20, which serves as a load energy absorber, is fixed by a bracket 12 to each side member 11. A bumper reinforcement 14 is fixed to a front end of each of the two crash boxes 20.

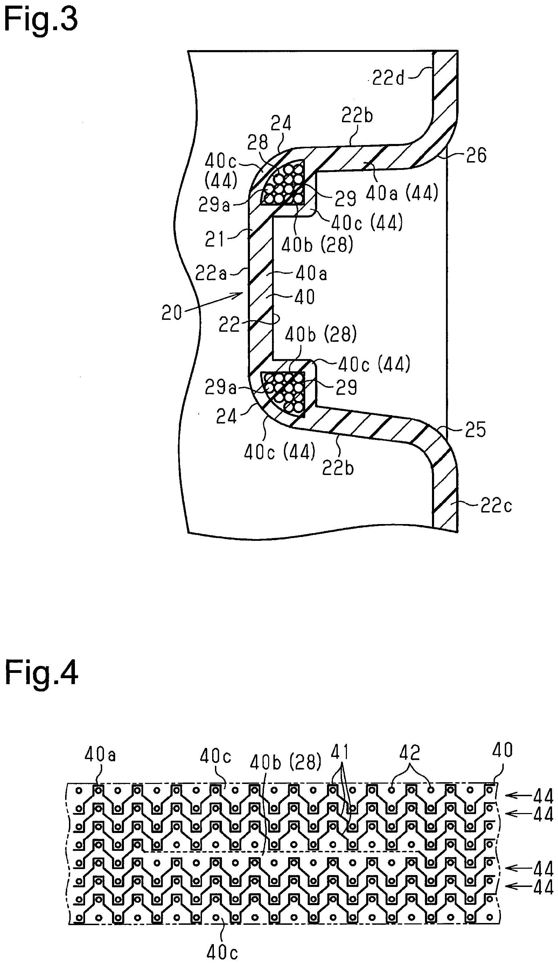

As shown in Fig. 2, the crash box 20 is formed from a fiber-reinforced resin that includes a multi-layer woven textile 40 as a reinforcement base material and a resin 13 as a matrix. As shown in Fig. 4, the multi-layer woven textile 40 is formed by weaving warps 41 and wefts 42. The warps 41 are interlaced with the wefts 42 of the multi-layer woven textile 40. The interlacement inseparably binds woven layers 44 of the multi-layer woven textile 40. Thus, the warps 41 form joining yarns that join the woven layers 44 of the multi-layer woven textile 40. In the present embodiment, the warps 41 and the wefts 42 are formed by carbon fibers that serve as reinforcement fibers.

As shown in Fig. 2, the crash box 20 includes a substantially corrugated beam 21. A cross-section of the beam 21 in a direction in which ridges alternate with furrows is shaped as an open cross-section that includes two grooves 22 arranged in parallel. With the beam 21, a direction in which the two grooves 22 are arranged and a direction in which the ridges alternate with the furrows will be referred to as a transverse direction, and a direction in which the groove 22 extends will be referred to as a longitudinal direction. The crash box 20 is used in a state in which a load is input in the longitudinal direction of the beam 21.

In the beam 21, the warps 41 of the multi-layer woven textile 40 extend in the transverse direction of the beam 21 in an oscillating state, and the wefts 42 of the multi-layer woven textile 40 extend in the longitudinal direction of the beam 21 in a non- oscillating state. The beam 21 is formed by shaping the multi-layer woven textile 40 to have an open cross-section.

Each groove 22 of the beam 21 includes a flat rectangular bottom wall 22a that forms a bottom of the groove 22 and flat rectangular side walls 22b that project from two long edges of the bottom wall 22a. The beam 21 includes a flat rectangular connection portion 22c continuous with the grooves 22 that are adjacent to each other in the transverse direction.

Further, the beam 21 includes flanges 22d located at both transverse ends of the beam 21. Each flange 22d projects from the long edge of one of the side walls 22b forming each groove 22 that is not connected with the connection portion 22c. Accordingly, one of the flanges 22d, one of the grooves 22, the connection portion 22c, the other one of grooves 22, and the other one of the flanges 22d are arranged in the transverse direction of the beam 21.

The beam 21 includes two bottom corners 24 near the bottom wall 22a of each groove 22. The bottom corner 24 is formed by bending the flat multi-layer woven textile 40. The bottom corner 24 is the portion extending in the longitudinal direction of the beam 21 along a ridge line between the bottom wall 22a and the side wall 22b of each groove 22. Further, the beam 21 includes a connection portion corner 25 and a flange corner 26. The connection portion corner 25 extends along a ridge line between each groove 22 and the connection portion 22c, and the flange corner 26 extends along a ridge line between each flange 22d and the side wall 22b.

The crash box 20 includes a first coupling portion 31 at one longitudinal end of the beam 21 and a second coupling portion 32 at the other longitudinal end of the beam 21. The first coupling portion 31 and the second coupling portion 32 are formed by shaping the multi-layer woven textile 40. The first coupling portion 31 and the second coupling portion 32 are flat plates. A direction in which surfaces of the first coupling portion 31 and the second coupling portion 32 extend is orthogonal to the longitudinal direction of the beam 21.

The first coupling portion 31 and the second coupling portion 32 are bent from each longitudinal end of the beam 21. The first coupling portion 31 is shaped to project from one of the longitudinal ends of each flange 22d and the connection portion 22c in a direction opposite to the direction in which the grooves 22 are recessed from surfaces of the connection portion 22c and the flange 22d. The second coupling portion 32 is shaped to project from the other one of the longitudinal ends of each flange 22d and the connection portion 22c in the direction in which the grooves 22 are recessed from the surfaces of the connection portion 22c and the flange 22d.

The first coupling portion 31 and the second coupling portion 32 include bolt holes 31a and 32a. A bolt 33 is inserted through each bolt hole 31a of the first coupling portion 31 and extended through the bumper reinforcement 14. A nut 34 is fastened to the bolt 33 extended through the bumper reinforcement 14 to fix the crash box 20 to the bumper reinforcement 14. A bolt 33 is inserted through the bolt hole 32a of the second coupling portion 32 and extended through the front side member 11 and the bracket 12. A nut 34 is fastened to the bolt 33, which is extended through the front side member 11 and the bracket 12 to fix the crash box 20 to the front side member 11 with the bracket 12.

The structure for ensuring strength of the bottom corners 24 in the crash box 20 will now be described.

As shown in Fig. 3, portions defining the bottom wall 22a and the side walls 22b that are continuous with the bottom corners 24 are formed by a main body 40a of the multi-layer woven textile 40. In the main body 40a, the woven layers 44 of the multi-layer woven textile 40 are all joined by the warps 41, which serve as the joining yarns (not shown). Each bottom corner 24 is formed by segments 40c of the multi-layer woven textile 40.

Fig. 4 is a schematic diagram of the multi-layer woven textile 40. Fig. 4 shows the multi-layer woven textile 40 prior to the formation of the bottom corner 24. The segments 40c are formed by a slit 40b dividing the multi-layer woven textile 40 into two. More specifically, in the multi-layer woven textile 40, the woven layers 44 that are continuous with the woven layers 44 of the main body 40a are divided into two by the slit 40b in a thickness direction (lamination direction) of the woven layers 44. The woven layers 44 of each of the two segments 40c are joined by the warps 41 (joining yarns). The number of the woven layers 44 in each of the two segments 40c is one half of that of the woven layers 44 in the main body 40a.

As shown in Fig. 3, each bottom corner 24 includes the slit 40b that is opened to separate the two segments 40c from each other. The bottom corner 24 includes an accommodation portion 28 surrounded by two segments 40c. The accommodation portion 28 is hollow and formed by opening the slit 40b so that the two segments 40c define a hollow. Thus, the accommodation portion 28 is also the slit 40b. The accommodation portion 28 extends in the longitudinal direction of the beam 21.

The crash box 20 includes a reinforcement member 29 that is accommodated in the accommodation portion 28 of each bottom corner 24. The reinforcement member 29 of the crash box 20 is a bundle of reinforcement fibers 29a. In the reinforcement member 29, the reinforcement fibers 29a are arranged in a single direction. A fiber axis direction of each reinforcement fiber 29a is oriented in the longitudinal direction of the beam 21. In the beam 21, an orientation angle of the reinforcement fibers 29a is set to 0°. The accommodation portion 28 is filled with reinforcement fibers 29a in a state extending straight in the longitudinal direction of the beam 21. The reinforcement fibers 29a of the reinforcement member 29 are formed by the same carbon fibers as the warps 41 and the wefts 42.

The crash box 20 is used so that a load input direction is the longitudinal direction of the beam 21. Accordingly, the bottom corners 24 of the crash box 20 accommodate the reinforcement fibers 29a in a state in which the fiber axis direction of the reinforcement fibers 29a extends in the load input direction. As a result, the reinforcement members 29 increase the strength of the crash box 20 in the load input direction is so that the strength is higher in the bottom corners 24 than other portions (bottom wall 22a, side walls 22b, and connection portion corners 25 and 26).

In the above crash box 20, when an impact load is applied to the bumper reinforcement 14 in a direction shown by arrow Y in Fig. 1, the crash box 20 is crushed in the longitudinal direction of the beam 21 to absorb the impact load energy. The reinforcement fibers 29a of the reinforcement member 29 absorb the impact load energy at the bottom corner 24 of the crash box 20. In the crash box 20, the number of the reinforcement fibers 29a in the reinforcement members 29 and the type of the reinforcement fibers 29a are set to absorb the targeted impact load.

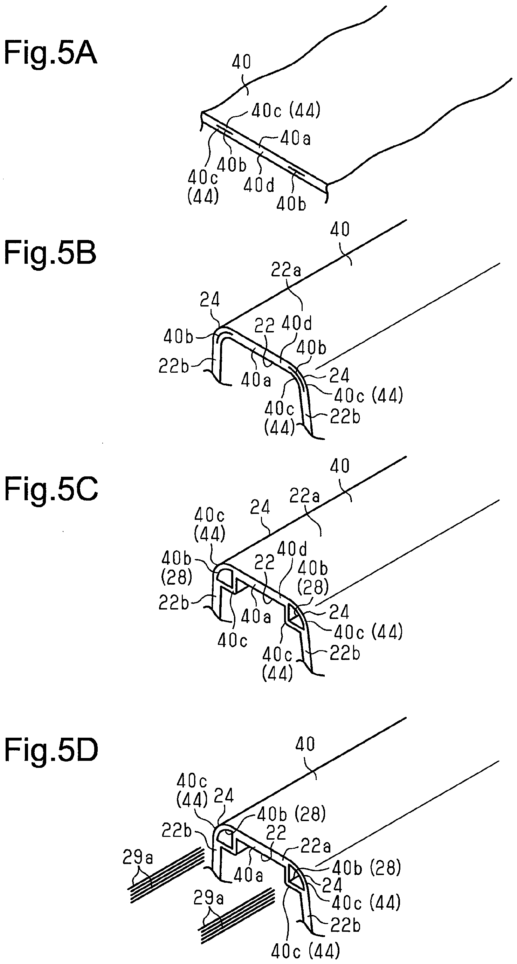

A method for manufacturing the crash box 20 will now be described with reference to Figs. 5A to 5D. Figs. 5A to 5D show only a portion proximate to the bottom corners 24 and do not show other portions.

As shown in Fig. 5A, the multi-layer woven textile 40 is first woven into a flat rectangular shape. The multi-layer woven textile 40 includes two longitudinal ends, each having an end surface 40d that is rectangular in a front view. A transverse direction of the end surface 40d will be referred to as a thickness-wise direction (lamination direction) of the multi-layer woven textile 40, and a longitudinal direction of the end surface 40d will be referred to as a widthwise direction of the multi-layer woven textile 40.

The thickness of the multi-layer woven textile 40 is set to be the same as other portions of the beam 21 excluding the bottom corners 24. The multi-layer woven textile 40 includes the slits 40b at the middle of the multi-layer woven textile 40 in the thickness direction. The slits 40b allow for separation of the woven layers 44 that are adjacent to each other in the thickness-wise direction. In the multi-layer woven textile 40, the woven layers 44 located toward both widthwise sides from each slit 40b are joined by the warps 41 (now shown) in the thickness-wise direction. The slit 40b extends over the entire length of the multi-layer woven textile 40 in the longitudinal direction.

Subsequently, the multi-layer woven textile 40 is shaped to form the beam 21, the first coupling portion 31, and the second coupling portion 32. When forming the beam 21, as shown in Fig. 5B, the bottom corners 24 are formed by bending the multi-layer woven textile 40 from a middle part of the slits 40b in the longitudinal direction of the end surface 40d.

Then, as shown in Fig. 5C, in the multi-layer woven textile 40, the two segments 40C are spread apart in the thickness direction to open the slits 40b and form the hollow accommodation portion 28.

Subsequently, as shown in Fig. 5D, the reinforcement fibers 29a are inserted in the accommodation portion 28. The reinforcement fibers 29a are inserted in a state in which the fiber axis direction of the reinforcement fibers 29a extends straight in the longitudinal direction of the multi-layer woven textile 40 so that the accommodation portion 28 is filled with the reinforcement fibers 29a. Then, the multi-layer woven textile 40 is impregnated with resin 13 and hardened to complete manufacturing of the crash box 20.

The above embodiment has the advantages described below.
(1) The crash box 20 includes the slit 40b that divides the multi-layer woven textile 40 in the thickness direction at the bottom corners 24. The slit 40b is opened to form the accommodation portion 28 that accommodates the reinforcement fibers 29a so as to ensure strength of the bottom corner 24. Accordingly, there is no need to increase the thickness of the entire multi-layer woven textile 40 to ensure strength of the bottom corner 24. Thus, the strength at the bottom corners 24 can be ensured without excessively reinforcing portions other than the bottom corners 24 such as the bottom wall 22a or the side walls 22b. Further, the reinforcement fibers 29a are accommodated in the slit 40b. Thus, there is no need to arrange a separate component at the bottom corner 24 or weld a separate component to prevent removal from the bottom corner 24. As a result, a situation is avoided in which the mass of the crash box 20 is increased more than necessary or the manufacturing cost of the crash box 20 is increased. This minimizes increases in cost and mass of the crash box 20 to minimal and ensures the strength of the bottom corners 24.
(2) The accommodation portion 28 of each bottom corner 24 is formed by the segments 40c of the multi-layer woven textile 40 divided by the slit 40b in the thickness-wise direction. Thus, the formation of the accommodation portion 28 does not increase the number of components or the mass.
(3) The multi-layer woven textile 40 is employed as the reinforcement base material of the crash box 20. When manufacturing the multi-layer woven textile 40, the slit 40b that forms the accommodation portion 28 can be formed at a portion corresponding to the bottom corner 24. Accordingly, the portion that forms the accommodation portion 28 can be manufactured with a loom, and the steps for forming the accommodation portion 28 are not increased.
(4) The reinforcement member 29 accommodated in the accommodation portion 28 of each bottom corner 24 is the reinforcement fibers 29a. Accordingly, the strength of the bottom corner 24 can easily be adjusted to the targeted strength by adjusting the number of the reinforcement fibers 29a.
(5) The fiber axis direction of the reinforcement fibers 29a extends in the input load direction on the crash box 20. Accordingly, the reinforcement fibers 29a absorb an impact load in a preferred manner.
(6) The fiber axis direction of the reinforcement fibers 29a is the same as the longitudinal direction in which the bottom corner 24 continuously extends thereby improving strength of the bottom corner 24.
(7) The reinforcement fibers forming the multi-layer woven textile 40 and the reinforcement fibers forming the reinforcement member 29 are both carbon fibers. This limits decreases in strength caused by mixing different types of materials in the crash box 20.

The above embodiment may be modified as described below.

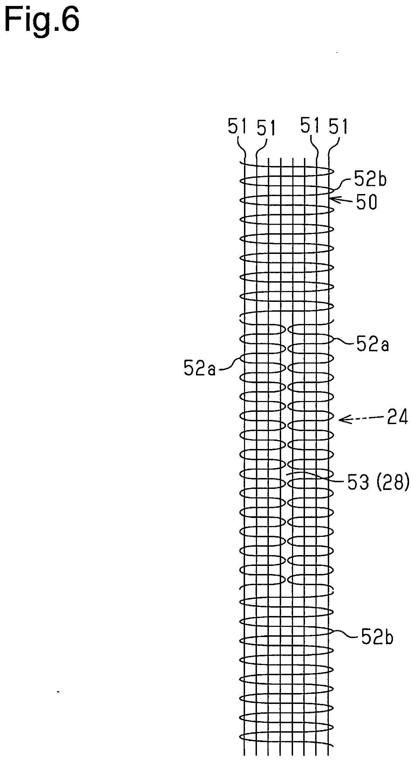

The reinforcement base material may be a laminated woven textile 50 instead of the multi-layer woven textile. For example, as shown in Fig. 6, with a plurality of flat woven textiles 51, a portion corresponding to each bottom corner 24 of the crash box 20 is divided into two, with one half of the flat woven textiles 51 on one side in the lamination direction (thickness-wise direction) and the other one half of the flat woven textiles 51 on the other side. One half of the flat woven textiles 51 on one side are joined by a joining yarn 52a in a state separated from the other half of the flat woven textiles 51 on the other side. At other portions of the laminated woven textiles 50 that do not correspond to the bottom corners 24, the flat woven textiles 51 are joined by the joining yarn 52b. The laminated woven textile 50 includes a slit 53 between one half of the flat woven textiles 51 on one side and the other half of the flat woven textile 51 on the other side.

In the laminated woven textile 50, the hollow accommodation portion 28 is formed in each bottom corner 24 when the two halves of the flat woven textile 51 of the two sides are spread apart in the thickness-wise direction to open the slit 53. The bottom corner 24 is formed by inserting the reinforcement fibers 29a into the accommodation portion 28.

In the crash box 20, the portions where the reinforcement members 29 ensure strength is not limited to the bottom corners 24 and may include the bottom wall 22a or the side walls 22b.

The corner having its strength ensured by the reinforcement member 29 may be at least one of the connection portion corners 25 or the flange corner 26 in addition to the bottom corners 24.

The corner having its strength ensured by the reinforcement members 29 may be at least one of the connection portion corners 25 or the flange corners 26 in addition to the bottom corners 24.

The reinforcement fibers 29a of the reinforcement member 29 may include reinforcement fibers extending in a fiber axis direction that differs from the longitudinal direction of the beam 21. For example, the reinforcement member 29 may be reinforcement fibers that include first reinforcement fibers 29a and second reinforcement fibers 29a. The fiber axis direction of the first reinforcement fibers 29a extends in the longitudinal direction of the beam 21 and is oriented at 0°. The fiber axis direction of the second reinforcement fibers 29a, which are fixed in advance to the first reinforcement fibers 29a, is oriented at 45° or 90°.

The reinforcement member 29 does not have to be the reinforcement fibers 29a of carbon fibers and may be, for example, reinforcement fibers of metal fibers.

The reinforcement fibers 29a of the reinforcement member 29 may be of a different type from that forming the multi-layer woven textiles 40 of the beam 21.

The reinforcement fiber 29a of the reinforcement member 29 may have a higher strength than that forming the multi-layer woven textile 40 to increase strength of the bottom corners 24.

The reinforcement member 29 does not have to be reinforcement fibers and may be a plate of metal or the like.

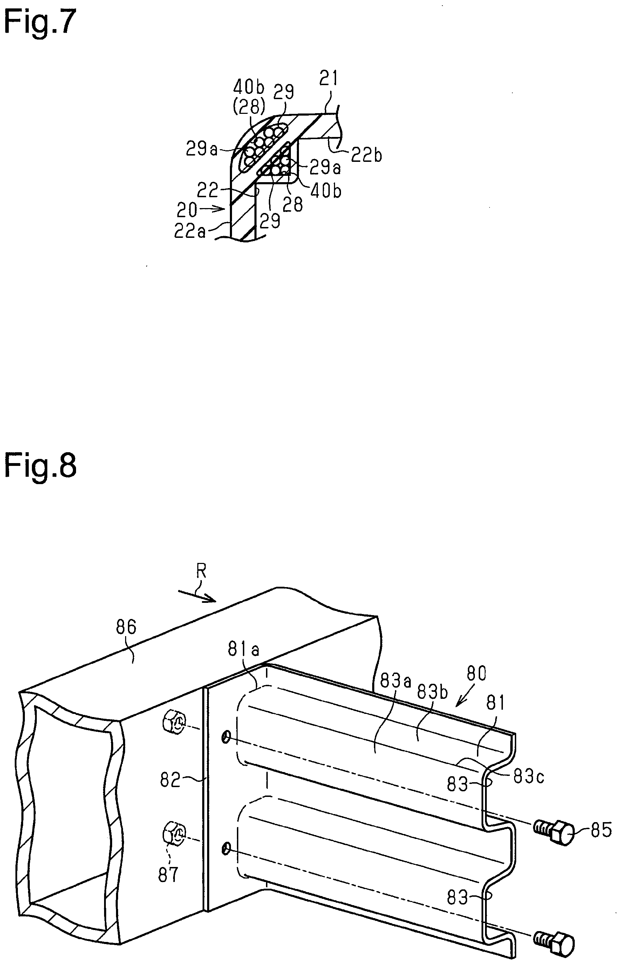

As shown in Fig. 7, two slits 40b (accommodation portions 28) may be formed in the thickness-wise direction of the multi-layer woven textile 40 or the laminated woven textile 50. Alternatively, three or more slits 40b may be formed.

The load energy absorber may be used as a pillar reinforcement. In this case, the load input direction would be 90°.

The load energy absorber may be used as a rocker.

## Claims

1. A load energy absorber formed by a fiber-reinforced resin, comprising:
a multi-layer woven textile or a laminated woven textile serving as a reinforcement base material, wherein the reinforcement base material includes a corner formed by bending the reinforcement base material;
a resin serving as a matrix;
a slit arranged in the reinforcement base material at a portion where at least the corner is formed;
a joining yarn that joins woven layers of the multi-layer woven textile or the laminated woven textile, wherein the joining yarn is configured to join the woven layers in a state in which the woven layers of the multi-layer woven textile or the laminated woven textile are divided into two or more in a thickness-wise direction; and
a reinforcement member accommodated inside the slit.

2. The load energy absorber according to claim 1, wherein the reinforcement member is a reinforcement fiber.

3. The load energy absorber according to claim 2, wherein
the reinforcement fiber is one of a plurality of reinforcement fibers,
the reinforcement fibers are arranged so that fiber axis directions extend in a single direction, and
the main axis direction is a load input direction.

4. The load energy absorber according to claim 2 or 3, wherein the reinforcement fiber forming the multi-layer woven textile or the laminated woven textile is the same as the reinforcement fiber forming the reinforcement member.

5. The load energy absorber according to any one of claims 1 to 4, wherein the load energy absorber is a crash box.
